# EUROPÄISCHE PATENTSCHRIFT

(11) **EP 2 297 008 B1**
(45) Veröffentlichungstag und Bekanntmachung des Hinweises auf die Patenterteilung: **07.12.2016**
(21) Anmeldenummer: 09753615.5
(22) Anmeldetag: 12.05.2009
(51) Int. Cl.: B65G 21/20, B07C 5/34

(54) **VERFAHREN ZUM ENTFERNEN VON GEBROCHENEN FLASCHEN AUS FLASCHENABFÜLLANLAGEN**
METHOD FOR REMOVING BROKEN BOTTLES FROM BOTTLE-FILLING INSTALLATIONS
PROCÉDÉ POUR RETIRER DES BOUTEILLES CASSÉES DES EMBOUTEILLEUSES

(30) Priorität: 30.05.2008 DE 102008026045
(43) Veröffentlichungstag der Anmeldung: 23.03.2011
(73) Patentinhaber: KHS GmbH, 44143 Dortmund (DE)
(72) Erfinder: PAROTH, Berthold, 44289 Dortmund (DE); STJEPIC, Anto, 44143 Dortmund (DE)
(86) Internationale Anmeldenummer: PCT/EP2009/003346
(87) Internationale Veröffentlichungsnummer: WO 2009/143960

(56) Entgegenhaltungen:
- JP-A- 8 002 658
- US-A- 4 235 187
- US-A- 6 035 718

## Beschreibung

Die Erfindung richtet sich ein Verfahren zum Entfernen von gebrochenen Flaschen mit Metallverschluss, insbesondere hinter Pasteurisierungseinrichtungen in Flaschenabfüllanlagen.

Unter anderem durch große Temperaturwechsel kann es in Flaschenabfüllanlagen, z.B. innerhalb der Pasteurisierungseinrichtung, zu Flaschenbrüchen kommen, so dass im weiteren Förderweg der Flaschen die entstandenen Scherben aus dem System entfernt werden müssen. Eine Möglichkeit besteht z.B. darin, die Führungsgitter der Flaschen so hoch zu setzen, dass Flaschenbruchstücke seltlich hindurchfallen können, wobei ein Problem darin besteht, dass etwa Flaschenscherben, die sich mitten der Förderbänder befinden, dort bleiben und so im weiteren Flaschenfluss stören.

US 6,035,718 offenbart ein Verfahren zum Entfernen von gebrochenen Flaschen, wobei zwei die Flaschen tragenden, hintereinander angeordneten Transportbändern, mit einer das Ausfallen von Scherben ermöglichenden Lücke zwischen den Transportbändern vorgesehen sind, und wobei oberhalb der Bandlücke ein die Lücke überbrückender Vakuumförderer zum Ergreifen und hängenden Überführen der intakten Flaschen über die Lücke vorgesehen ist.

Hier setzt die Erfindung bei Flaschen mit Metallverschlüssen an, wobei die Aufgabe der Erfindung darin besteht, etwaige anfallende Scherben von Flaschen mit Metallverschlüssen sicher aus dem weiteren Förderweg zu entfernen.

Diese Aufgabe wird mit dem Verfahren nach Anspruch 1 gelöst.

Durch diese Manipulation der Flaschen wird mit Sicherheit erreicht, dass alle intakten Flaschen mittels des magnetisierbaren Kopfförderers ergriffen werden und zuverlässig über die Ausfalllücke für die Scherben transportiert werden.

Ausgestaltungen der Erfindung ergeben sich aus den Unteransprüchen, wobei vorgesehen sein kann, dass die Elemente des magnetisierbaren Kopfförderers in ihrer Magnetisierungsstärke veränderbar ausgebildet sind.

Diese veränderbare Magnetisierstarke ermöglicht, z.B. im Anlaufbereich des Flaschenförderers, eine vergleichsweise starke Magnetisierung vorzusehen, so dass mit Sicherheit alle metallischen Verschlüsse der Flaschen unmittelbar und damit mittelbar sämtliche intakten Flaschen angezogen werden und vom Förderer erfassbar sind.

Hier sieht die Erfindung in weiterer Ausgestaltung vor, dass der Kopfförderer zum leichten Anheben der Flaschen vor Erreichen der Scherbenausfalllücke derart positioniert ist, dass die erfassten Flaschen geringfügig angehoben werden.

Um ein sicheres und leichtes Abstellen der Flaschen auf den weiteren nachfolgenden Förderer sicher zu stellen, sieht die Erfindung in weiterer Ausgestaltung auch vor, dass die Magnetstärke der einzelnen Elemente des Kopfförderers am Ende des Kopfförderer stark verringert und/oder abgeschaltet wird.

Zusätzlich kann, je nach Flaschenart und insbesondere je nach Fördergeschwindigkeit auch vorgesehen sein, dass am Ende des Kopfförderers ein die Flaschen abstreifendes Element vorgesehen ist.

Nach der Erfindung ist dabei die Gestaltung des Kopfförderers in unterschiedlichen Varianten möglich. So sieht die Erfindung vor, dass der Kopfförderer als Förderband ausgebildet ist oder als Drehscheibe mit einzelnen magnetisierbaren Lamellen.

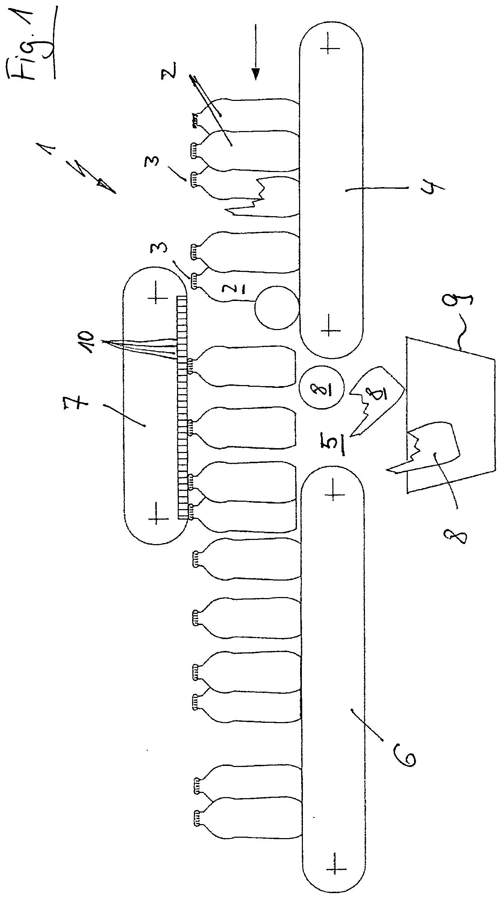

Weitere Merkmale, Einzelheiten und Vorteile der Erfindung ergeben sich aufgrund der nachfolgenden Beschreibung sowie anhand der Zeichnungen. Diese zeigt in der einzigen Figur die Seitenansicht eines Prinzipbildes des erfindungsgemäßen Verfahrens.

Die allgemein mit 1 bezeichnete Vorrichtung dient zum Transport von Flaschen 2, z.B. aus dem Bereich einer nicht näher dargestellten Pasteurisierungseinrichtung von Flaschenabfüllanlagen, wobei die Flaschen 2 im dargestellten Beispiel mit metallischen Kronenkorken 3 oder ähnlichen metallischen Verschlüssen versehen sind. Zum Transport ist dabei ein erstes Transportband 4 vorgesehen, dem unter Aussparung einer mit 5 bezeichneten Lücke ein zweites Transportband 6 nachgeordnet ist.

Über der Lücke 5 ist im etwa in der Höhe der Flaschengröße mit geringfügigem Übermaß ein Magnetförderer 7 vorgesehen. Im Einlauf des Magnetförderers wird durch das erzeugte Magnetfeld der jeweilige metallische Verschluss 3 der entsprechenden Flasche 2 angezogen und die Flasche 2 wird geringfügig vom Magnetförderer 7 angehoben, der diese dann hängend über die Lücke 5 fördert. Auf dem Band befindliche Bruchstücke, allgemein mit 8 bezeichnet, fallen dann in die Lücke 5 und von dort in ein darunter befindliches Auffanggefäß 9,

Erfindungsgemäß können die mit 10 bezeichneten Lamellen des Magnetförderers 7, z.B. elektrisch so angesteuert sein, dass die jeweilige Magnetstärke geändert werden kann, etwa in der Weise, dass sie im Einlaufbereich des Magnetförderers 7 vergleichsweise stark ausgebildet ist, während sie am Ende des Magnetförderers zum Absetzen der Flaschen 2 auf dem Folgeband 6 stark verringert oder gar abgeschaltet werden kann.

Natürlich ist das beschriebene Ausführungsbeispiel der Erfindung noch in vielfacher Hinsicht abzuändern, ohne den Grundgedanken zu verlassen. So muss es sich bei dem Magnetförderer nicht um einen Bandförderer 7, wie in der Figur angedeutet handeln, hier kann auch eine Drehschebe mit entsprechenden alektrisierbaren Lamellen vorgesehen sein und dgl. mehr. Auch kann ein Abstreifelement für die Flaschen vom Magnetförderer 7 zusätzlich in der Anlage angebracht sein, auch dies ist in der Figur nicht näher dargestellt.

## Patentansprüche

1. Verfahren zum Entfernen von gebrochenen Flanschen (2) mit Metallverschluss (3), insbesondere hinter Pasteurisierungseinrichtungen in Flaschenabfüllanlagen, wobei zwei die Flaschen (2) tragenden hintereinander angeordneten Transportbändern (4,6), mit einer das Ausfallen von Scherben (8) ermöglichenden Lücke (5) zwischen den Transportbändern (4, 6) vorgesehen sind, und wobei oberhalb der Bandlücke (5) ein die Lücke überbrückender rnagnetisierbarer Kopfförderer (7) zum Ergreifen und hängenden Überführen der intakten Flaschen (2) über die Lücke (5) vorgesehen ist.

2. Verfahren nach Anspruch 1, **dadurch gekennzeichnet, dass** der Kopfförderer (7) magnetisierbare Elemente (10) aufweist, wobei die Elemente (10) in ihrer Magnetisierungsstärke veränderbar ausgebildet sind.

3. Verfahren nach Anspruch 1 oder 2, **dadurch gekennzeichnet, dass** der Kopfförderer (7) zum leichten Anheben der Flaschen vor Erreichen der Scherbenausfalllücke (5) derart positioniert Ist, dass die erfassten Flaschen (2) geringfügig angehoben werden.

4. Verfahren nach Anspruch 2, **dadurch gekennzeichnet, dass** die Magnetstärke der einzelnen Elemente (10) des Kopfförderers (7) am Ende des Kopfförderers (7) stark verringert und/oder abgeschaltet wird.

5. Verfahren nach einem der vorherigen Ansprüche, **dadurch gekennzeichnet, dass** am Ende des Kopfförderers (7) ein die Flaschen abstreifendes Element vorgesehen ist.

6. Verfahren nach einem der vorherigen Ansprüche, **dadurch gekennzeichnet, dass** der Kopfförderer (7) als Band oder Drehscheibe mit einzelnen magnetisierbaren Lamellen (10) ausgebildet ist.

## Claims

1. Method for removing broken bottles (2) with metal closures (3), in particular downstream of pasteurisation devices, in bottle-filling installations, wherein two transport belts (4, 6) carrying the bottles (2), arranged behind one another, are provided with a gap (5) between the transport belts (4, 6), allowing for shards (8) to fall out, and wherein a magnetisable overhead conveyor (7) is provided, bridging the gap, for gripping and conveying the intact bottles (2) suspended over the gap (5).

2. Method according to claim 1, **characterised in that** the overhead conveyor (7) comprises magnetisable elements (10), wherein the elements (10) are configured such as to be changeable in their magnetising strength.

3. Method according to claim 1 or 2, **characterised in that**, for the easy raising of the bottles before reaching the shard outfall gap (5), the overhead conveyor (7) is positioned in such a way that the gripped bottles (2) are slightly raised.

4. Method according to claim 2, **characterised in that**, at the end of the overhead conveyor (7) the magnetic strength of the individual elements (10) of the overhead conveyor is substantially reduced and/or switched off.

5. Method according to any one of the preceding claims, **characterised in that** an element is provided at the end of the overhead conveyor (7) for scraping the bottles.

6. Method according to any one of the preceding claims, **characterised in that** the overhead conveyor (7) is configured as a belt or turntable with individual magnetisable segments (10).

## Revendications

1. Procédé servant à retirer des bouteilles (2) cassées comprenant un système de fermeture en métal (3), en particulier derrière des équipements de pasteurisation dans des installations de remplissage de bouteilles, dans lequel sont prévues deux bandes transporteuses (4, 6) supportant les bouteilles (2), disposées l'une derrière l'autre, avec un interstice (5), permettant la chute de débris (6), entre les bandes transporteuses (4, 6), et dans lequel un convoyeur de tête (7) magnétisable surmontant l'interstice, servant à saisir et à transférer en suspension les bouteilles (2) intactes au-dessus de l'interstice (5) est prévu au-dessus de l'interstice de bande (5).

2. Procédé selon la revendication 1, **caractérisé en ce que** le convoyeur de tête (7) présente des éléments (10) magnétisables, dans lequel les éléments (10) sont réalisés avec leur force de magnétisation variable.

3. Procédé selon la revendication 1 ou 2, **caractérisé en ce que** le convoyeur de tête (7) servant à soulever facilement les bouteilles avant qu'elles n'atteignent l'interstice de chute de débris (5) est positionné de telle manière que les bouteilles (2) saisies sont légèrement soulevées.

4. Procédé selon la revendication 2,
**caractérisé en ce que** la force magnétique des divers éléments (10) du convoyeur de tête (7) est fortement réduite et/ou coupée au niveau de l'extrémité du convoyeur de tête (7).

5. Procédé selon l'une quelconque des revendications précédentes,
**caractérisé en ce qu'**un élément enlevant les bouteilles est prévu au niveau de l'extrémité du convoyeur de tête (7).

6. Procédé selon l'une quelconque des revendications précédentes,
**caractérisé en ce que** le convoyeur de tête (7) est réalisé sous la forme d'une bande ou d'un disque tournant pourvu(e) de diverses lamelles (10) magnétisables.
